# EUROPEAN PATENT APPLICATION

(11) **EP 3 845 868 A1**
(43) Date of publication of application: **07.07.2021**
(21) Application number: 19220212.5
(22) Date of filing: 31.12.2019
(51) Int. Cl.: G01F 15/00, G01F 1/06, G01F 15/07, G01F 15/14

(54) **FIXING ELEMENT FOR HOUSING OF FLOW METER COUNTERS**

(71) Applicant: Apator Powogaz Spolka Akcyjna, 60-542 Poznan (PL)
(72) Inventor: Szulc, Tomasz, 61-131 Poznan (PL)
(74) Representative: Wroblewski, Marcin Jan

(57) **Abstract**

Fixing element (11) adapted to eliminate axial clearance between the counter module (14) and the external housing (15) of the counter mechanism (10) of the flow meter comprising a deformable part (111) adapted to support the fixing element (11) on the inside part of the external housing (15) of the flow meter, a reinforcing element (112) to reinforce the deformable part (111), the base (113) adapted to support the fixing element (11) on the surface of the counter module (14) of the flow meter and the fastening element (114) to embed in the opening on the surface of the counter module (14) of the flow meter.

The flow meter's counter mechanism (10) comprising the base of the counter mechanism (12), the fastening ring (13), counter module (14), the said fixing element (11) and the external housing (15).

## Description

### Technical field

The subject of the invention is a fixing element for housing flow meter counters.

### State of the art

The Chinese utility model CN2179969Y describes a water meter comprising threaded connectors, shock absorber ring, housing, cover, cap, sealing ring, meter, cover seal, water meter glass cover, rubber cover ring, gear box, rotor box, rotor box with the rotor, water filter mesh and screws, however it is the combined part between the bottom opening of the meter and the rotor box that is equipped with a sealing ring. Furthermore, according to this utility model, the said rotor passes through the gear box, and the rotor box is placed at the bottom edge of the gear box. The said water filter mesh is placed on the rotor box, and the rubber cover ring is pressed against the water meter housing and the counter. This design of the water meter ensures tightness of the device, clear and convenient measurement reading, and the water meter disc does not get covered with rust.

The European patent EP212000B1 describes a flowmeter comprising a rotor housing positioned inside a closed pipe, so that the fluid flowing through the said pipe turns the rotor placed in it. The rotor housed and designed in such a way that it can be easily rotated by the fluid flowing through it. The reduction mechanism is coupled to the rotor and its goal is to reduce the number of rotor revolutions in several steps. The task of the display unit and the reduction mechanism coupled to it is to indicate the fluid flow that is lower than the recommended fluid flow rate. The display unit along with the transparent meter housing covering the said display unit and containing the integrated meter assembly for measuring integrated fluid flow velocities for fluids passed through the meter housing. Furthermore, the integrated meter assembly and the reduction mechanism are block-connected to each other with magnetic coupling agents.

The Korean patent KR100926266B1 describes an antifreeze water meter comprising a housing with water inlet and outlet, a coupling cap to which an open/close lid is attached and connected with the upper part of the housing, flexible sheet placed on the bottom surface of the lower meter panel and a rotor mounted on the meter panel. Furthermore, the flexible sheet is formed integrally on the bottom surface of the lower meter panel in order to support the said bottom surface of the lower meter panel and the lower surface of the rotor housing. Additionally, the water meter according to the invention comprises a rotor housing embedded in the water meter housing under the seat and a flexible washer placed on the lower surface of the rotor housing, in close contact with the lower surface of the water meter housing. The flexible sheet and the flexible washer have numerous protrusions and grooves which prevent the said elements from wearing off too rapidly during work.

There also exists a single-jet, dry velocity water meter type JS 2.5 manufactured by Metron, which contains a body, a rotor, a sealing, a cover, and a counter mechanism. The counter mechanism comprises base, gear wheels (transmission), top plate, and housing. Furthermore, the water meter contains a fixing element placed between the top plate of the counter mechanism and its housing. The fixing element mounted on the upper plate of the mechanism fills the space between the housing of the mechanism and the top plate of the mechanism. The said fixing element encircles the upper plate of the mechanism and covers the entire perimeter of the upper plate of the mechanism.

In state of the art there exist water meters for measuring water flow in closed conduits. This type of water meter is divided into a transfer wet space and a closed dry space with a tight partition. A measuring rotor is placed within the wet space, and the counter mechanism is placed within the dry space. The measuring rotor is coupled to the counter via magnetic coupling. The driving clutch member, which is combined with the measuring rotor, is placed on one side of the partition, while the coupled clutch member is combined with the counter mechanism on the other side of the partition. The counter mechanism counts and shows the amount of water flowing through the water meter. To ensure accurate reading, the counter mechanism must remain leak-tight in accordance with IP68 protection class. The counter mechanism comprises a counter module, a copper base, a washer and a glass housing. In order to eliminate vertical clearance of the counter module, a fixing element is used in the mechanism's housing.

In state of the art there exists a problem of axial clearance in the dry part of the flow meters, especially water meters. This problem is particularly important in water meters of IP68 class. Currently, the bases of the counter mechanism in flow meters adapted wto the IP68 standard containing the counter module are made of copper, and their external housings are made of glass. This combination of materials is necessary as these devices must meet the IP68 standard, so that it is possible to effectively read the indications of the counter module and prevent moisture from getting inside the housing. The use of glass housing which has manufacturing accuracy of +/- 0,5-1 mm causes axial clearance between the counter module and the external housing of the flow meter's counter mechanism, which in turn affects the lack of stability of these counter mechanisms and the accuracy of the measurement itself.

The currently used fixing elements which are intended for eliminating axial clearance have geometric dimensions similar to the diameter of the whole counter mechanism. Furthermore, some of the fixing elements are designed in such a way that they cover the entire perimeter of the counter module's upper plate, including the part used for printed information, which negatively affects the comfort of reading the indications and technical parameters of the flow meter. Therefore, it would be beneficial to develop such a design of a flow meter mechanism that would improve existing solutions without the drawbacks described above.

### Summary of the invention

The subject of the invention is a fixing element to be used in flow meters. The fixing element is used to eliminate axial clearance between the counter module and the external housing of the flow meter's counter mechanism. The fixing element comprises a deformable fixing part adapted to support the fixing element on the inside of the external housing of the flow meter, an element for reinforcing the deformable fixing part, a base adapted to support the fixing element on the surface of the flow meter's counter module, and a mounting element to be embedded in the opening on the surface of the flow meter's counter module.

Preferably, the deformable part of the fixing element comprises at least two flexible elements arranged symmetrically to each other.

Preferably, the flexible elements of the said deformable fixing part are adapted to deform outwardly.

Preferably, the flexible elements of the said deformable part are adapted to deform inwardly.

Preferably, the said flexible elements of the deformable part have a deformation range limited by geometrical dimensions.

Preferably, the fixing element comprises two or three or four flexible elements of the deformable part which form a deltoid shape in the outline.

The use of flexible elements forming a deltoid shape in the outline allows for limiting the pressure on the external housing of the flow meter's counter mechanism towards the base of the counter mechanism.

Preferably, the fixing element comprises two or three or four flexible elements of the deformable fixing part which form a V-shaped in the outline.

As the number of the flexible elements of the fixing part of the fixing element increases, the pressure of the counter module against the base of the counter mechanism also increases.

Preferably, the base of the fixing element is cuboid or cylindrical.

Preferably, the fastening element of the fixing element is cuboid or cylindrical.

The invention also relates to a flow meter's counter mechanism comprising a base of a counter mechanism, a fastening ring, a counter module, the said fixing element, and an outer housing.

Preferably, the flow meter comprising the said counter mechanism.

Preferably, the flow meter is adapted to measure the flow of water or gas.

### Advantages of the invention

The solution according to the invention allows eliminating axial clearance which occurs in the counter mechanisms currently used in flow meters.

Furthermore, the presented solution allows for controlling the tension of the external housing of the flow meter's counter mechanism against its base.

The fixing element according to the invention has dimensions considerably smaller than the diameter of the counter mechanism and does not obstruct the counter module's upper plate including the part used for printed information, which positively affects the comfort of reading the indications and technical parameters of the flow meter.

Due to the simplicity of implementation and small size, the disclosed solution allows for reduction of costs associated with manufacturing of flow meters.

The solution according to the invention is easy to assemble and allows the use of existing assembly openings.

Furthermore, the solution according to the invention allows for reducing the increase of the coupling distance between the dry part of the flow meter and its wet part.

### Description of figures

The subject of the invention is illustrated in the embodiments in the drawing, in which:
Fig. 1A is a perspective view of the fixing element with two flexible elements contouring the V shape according to the invention;
Fig. 1B is a front view of the fixing element with two flexible elements contouring the V shape according to the invention;
Fig. 1C is a bottom view of the fixing element with two flexible elements forming a V-shape according to the invention;
Fig. 2A is a front view of the fixing element with three flexible elements according to the invention;
Fig. 2B is a perspective view of the fixing element with three flexible elements according to the invention;
Fig. 3A is a front view of the fixing element with four flexible elements according to the invention;
Fig. 3B is a perspective view of the fixing element with four flexible elements according to the invention;
Fig. 4A is a perspective view of the fixing element with two flexible elements contouring the deltoid shape prior to assembly according to the invention;

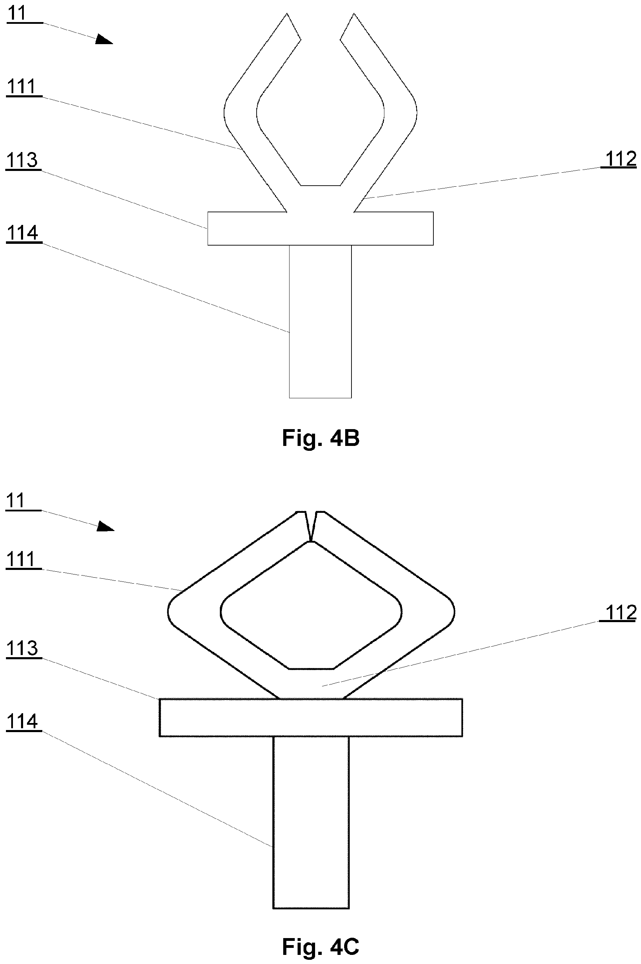

Fig. 4B is a front view of the fixing element with two flexible elements contouring the deltoid shape prior to assembly according to the invention;
Fig. 4C is a front view of the fixing element with two flexible elements contouring the deltoid shape after assembly according to the invention;

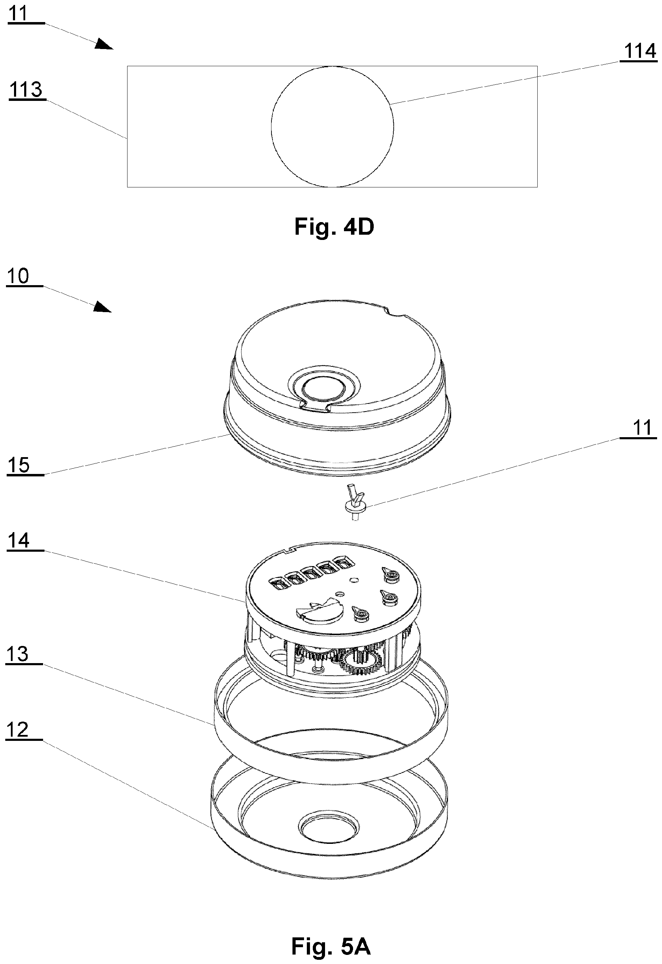

Fig. 4D is a bottom view of the fixing element with two flexible elements contouring the deltoid shape according to the invention;
Fig. 5A is an exploded view of the counter mechanism of a flow meter with the fixing element according to the invention;

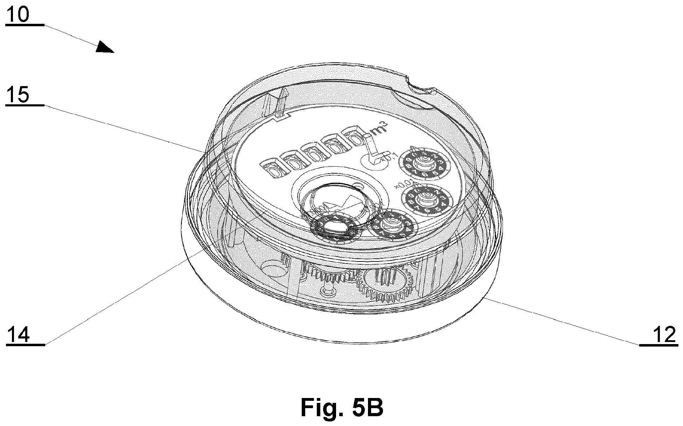

Fig. 5B shows the counter mechanism of a flow meter with the fixing element when assembled according to the invention.

### Description of the invention

### First embodiment

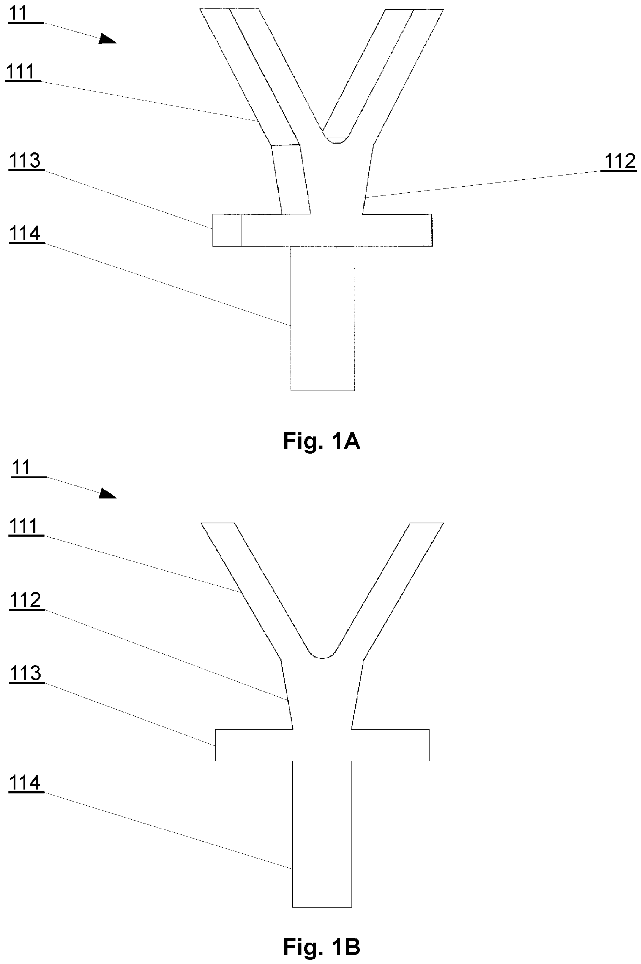

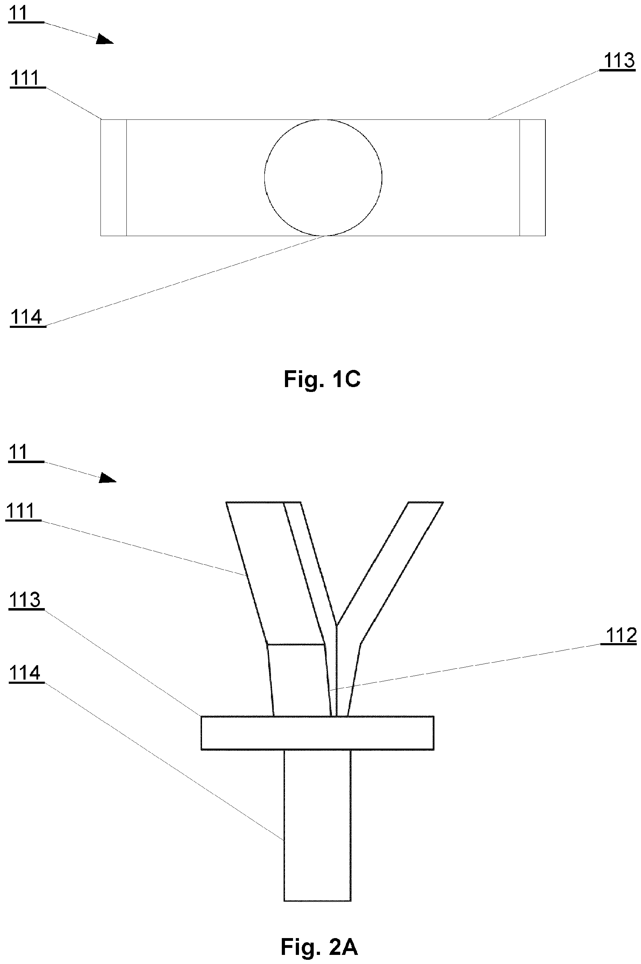

Fig. 1 shows the fixing element 11 for eliminating axial clearance between the counter module 14 and the housing 15 of the flow meter's counting mechanism 10. The fixing element 11 comprises a deformable part 111 adapted to support the fixing element 11 on the inside of the housing 15 of the counter mechanism 10.

The said deformable part 111 is composed of two symmetrically arranged flexible elements, which are adapted to deform outwardly and have a deformation range limited by geometrical dimensions. The flexible elements of the deformable fixing part 111 of the present embodiment form a V-shaped contour.

Furthermore, the fixing element 11 comprises a reinforcing element 112, a deformable part 111, a cuboid base 113 adapted to support the fixing element 11 on the surface of the counter module 14 of the flow meter's counter mechanism 10, and a fastening element 114 for embedding in an opening on the surface of the counter module 14 of the flow meter's counter mechanism 10.

The fixing element 11 according to the invention can be made of plastic such as: polycarbonate (PC), acrylonitrile butadiene styrene (ABS) a combination of polycarbonate and acrylonitrile butadiene styrene terpolymer, polyamide (PA), polystyrene (PS), polyester (PET), 2-diphenyloxazole (PPO), butylene poly-terephthalate (PBT), polyolefin (PP or PE) or composites of the above materials filled with glass fiber, glass balls, carbon fibers, metal, rubber or wood.

### Second embodiment

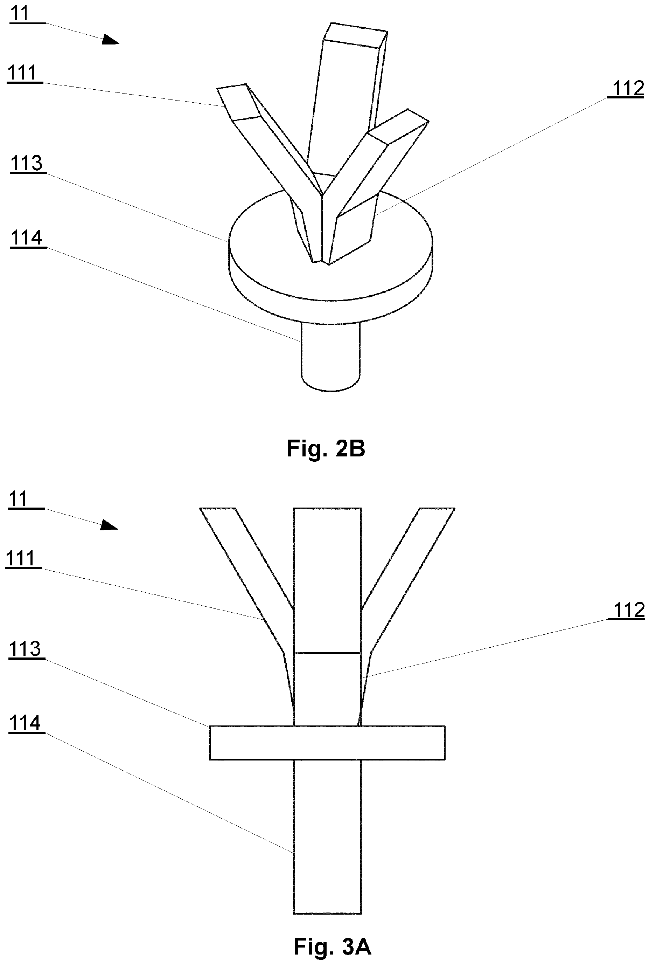

The fixing element 11 according to the second embodiment (Fig. 2) as in the first embodiment, except that its deformable part 111 is composed of three flexible elements arranged symmetrically to each other and the base 113 is cylindrical.

### Third embodiment

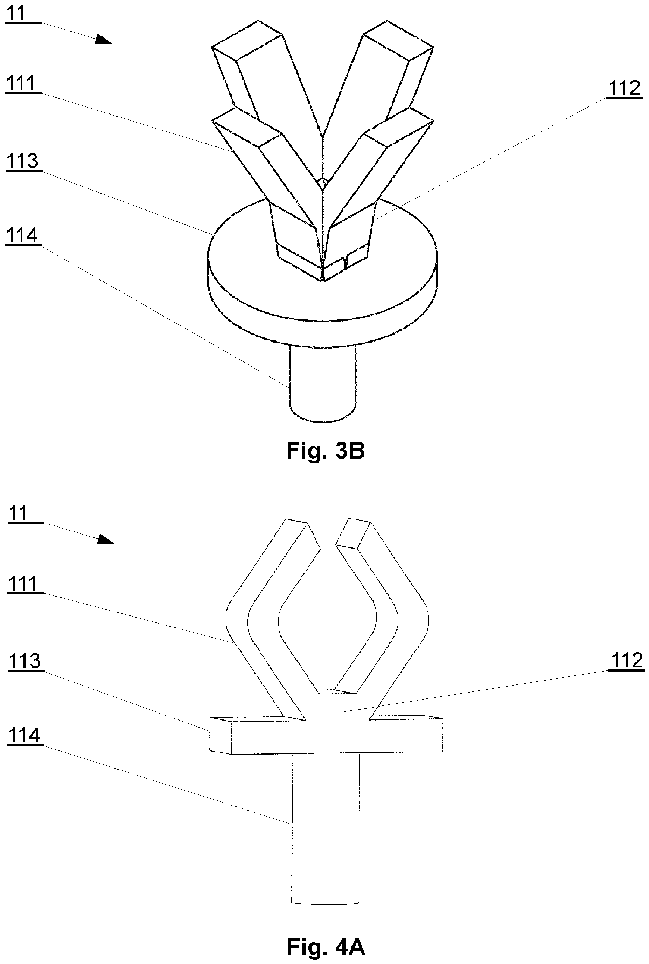

The fixing element 11 according to the third embodiment (Fig. 3) as in the first embodiment, except that its deformable part 111 is composed of four flexible elements arranged symmetrically to each other, and the base 113 is cylindrical.

### Fourth embodiment

The fixing element 11 according to the fourth embodiment as in the first embodiment, except that its deformable fixing part 111 is composed of flexible elements adapted for deforming inwardly and forming a deltoid shape in the contour. Using this shape of the fixing element 11 allows to reduce the tension on the external housing 15 of the flow meter's counter mechanism against the base 12 of the counter mechanism 10.

### Fifth embodiment

The counter mechanism 10 of the flow meter according to the invention comprises the fixing element 11 according to any of the embodiments 1 to 4, the base of the counter mechanism 12, the fastening ring 13, the counter module 14, and the external housing 15. Furthermore, the flow meter's counter mechanism 10 is adapted to measure water or gas flow.

## Claims

**1.** Fixing element (11) suitable for eliminating axial clearance between the counter module (14) and the external housing (15) of the counter mechanism (10) of the flow meter comprising:
- deformable part (111) adapted to support the fixing element (11) on the inner side of the external housing (15) of the flow meter,
- reinforcing element (112) for reinforcing the deformable part (111),
- base (113) adapted to support the fixing element (11) on the surface of the counter module (14) of the flow meter,
- fastening element (114) for embedding in the opening on the surface of the counter module (14) of the flow meter.

**2.** Fixing element according to claim 1, in which the deformable part (111) is composed of at least two flexible elements arranged symmetrically to each other.

**3.** Fixing element according to claim 2, in which the flexible elements of the deformable part (111) are adapted to deform outwardly.

**4.** Fixing element according to claim 2, in which the flexible elements of the deformable part (111) are adapted to deform inwardly.

**5.** Fixing element according to claim 4, in which the flexible elements of the deformable part (111) have a deformation range limited by geometrical dimensions.

**6.** Fixing element according to claim 5, comprising two or three or four flexible elements of the deformable part (111) which form a deltoid shape in the outline.

**9.** Fixing element according to claim 3, comprising two or three or four flexible elements of the deformable part (111) which form a V-shape in the outline.

**10.** Fixing element according to any of the previous claims in which the base (113) is cuboid or cylindrical.

**11.** Fixing element according to any of the previous claims in which the fastening element (114) is cuboid or cylindrical.

**12.** Flow meter's counter mechanism (10) comprising:
- base of the counter mechanism (12),
- fastening ring (13),
- counter module (14),
- fixing element (11) according to any of the claims from 1 to 11,
- external housing (15).

**13.** Flow meter comprising counter mechanism according to claim 12.

**14.** Flow meter according to claim 13 adapted to measure the flow of water or gas.
